# EUROPEAN PATENT APPLICATION

(11) **EP 3 632 850 A1**
(43) Date of publication of application: **08.04.2020**
(21) Application number: 18806731.8
(22) Date of filing: 25.04.2018
(51) Int. Cl.: C01G 9/04

(54) **PRODUCTION METHOD FOR AQUEOUS SOLUTION OF ZINC HALIDE**

(30) Priority: 22.05.2017 JP 2017101064
(71) Applicant: Showa Denko K.K., Tokyo 105-8518 (JP)
(72) Inventor: FUKUCHI, Yohsuke, Tokyo 105-8518 (JP); NAKAMURA, Atsushi, Tokyo 105-8518 (JP); INOUE, Nozomi, Tokyo 105-8518 (JP); HINO, Mitsuhiro, Tokyo 103-0021 (JP); SEKIGUCHI, Tomoki, Tokyo 103-0021 (JP)
(74) Representative: Strehl Schübel-Hopf & Partner
(86) International application number: PCT/JP2018/016882
(87) International publication number: WO 2018/216427

(57) **Abstract**

Provided is a method for producing a highly pure aqueous solution of zinc halide from a mixture containing a zinc halide. The method for producing an aqueous solution of zinc halide includes an addition step of adding water and a hydrogen halide to a mixture containing an alcohol having a carbon number of 3 or less, a zinc halide, and zinc to give a liquid mixture, and a distillation step of distilling the liquid mixture to remove the alcohol having a carbon number of 3 or less from the liquid mixture, giving an aqueous solution of zinc halide.

## Description

### Technical Field

The present invention relates to a method for producing an aqueous solution of zinc halide.

### Background Art

Metal zinc, which has reducing properties, can be used in organic synthesis. For example, Patent Document 1 discloses a method of dehalogenation reaction by bringing metal zinc into contact with a halogenated hydrocarbon having a fluorine atom and a chlorine atom to eliminate the chlorine atom, producing a fluorinated olefin. The reaction gives a solution containing zinc chloride, but no method of utilizing the resulting zinc chloride has been disclosed.

### Citation List

### Patent Literature

PTL 1: JP 5005681 B

### Summary of Invention

### Technical Problem

The present invention is intended to provide a production method for a highly pure aqueous solution of zinc halide from a mixture containing a zinc halide.

### Solution to Problem

To solve the problems, aspects of the present invention are the following [1] to [6].
[1] A method for producing an aqueous solution of zinc halide includes
   an addition step of adding water and a hydrogen halide to a mixture containing an alcohol having a carbon number of 3 or less, a zinc halide, and zinc to give a liquid mixture, and
   a distillation step of distilling the liquid mixture to remove the alcohol having a carbon number of 3 or less from the liquid mixture, giving an aqueous solution of zinc halide.
[2] The method for producing an aqueous solution of zinc halide according to the aspect [1] further includes
   a mixture preparation step of removing, from a mixture containing an organic solvent, a zinc halide, and zinc, the organic solvent, and then adding an alcohol having a carbon number of 3 or less to prepare a mixture containing the alcohol having a carbon number of 3 or less, the zinc halide, and the zinc, and
   the mixture containing the alcohol having a carbon number of 3 or less, the zinc halide, and the zinc prepared in the mixture preparation step is subjected to the addition step.
[3] In the method for producing an aqueous solution of zinc halide according to the aspect [1], a reaction solution obtained by dechlorination reaction of a chlorinated and fluorinated compound as a hydrocarbon compound having chlorine and fluorine in the presence of zinc is used as the mixture containing an alcohol having a carbon number of 3 or less, a zinc halide, and zinc, the hydrogen halide is hydrogen chloride, and the zinc halide is zinc chloride.
[4] In the method for producing an aqueous solution of zinc halide according to the aspect [2], a reaction solution obtained by dechlorination reaction of a chlorinated and fluorinated compound as a hydrocarbon compound having chlorine and fluorine in the presence of zinc is used as the mixture containing an organic solvent, a zinc halide, and zinc, the hydrogen halide is hydrogen chloride, and the zinc halide is zinc chloride.
[5] In the method for producing an aqueous solution of zinc halide according to the aspect [1] or [2], the hydrogen halide is hydrogen chloride, and the zinc halide is zinc chloride.
[6] In the method for producing an aqueous solution of zinc halide according to any one of the aspects [1] to [5], in the distillation step, the liquid mixture is distilled by heating at 50°C or more and 150°C or less.

### Advantageous Effects of Invention

According to the present invention, a highly pure aqueous solution of zinc halide can be produced from a mixture containing a zinc halide.

### Brief Description of Drawings

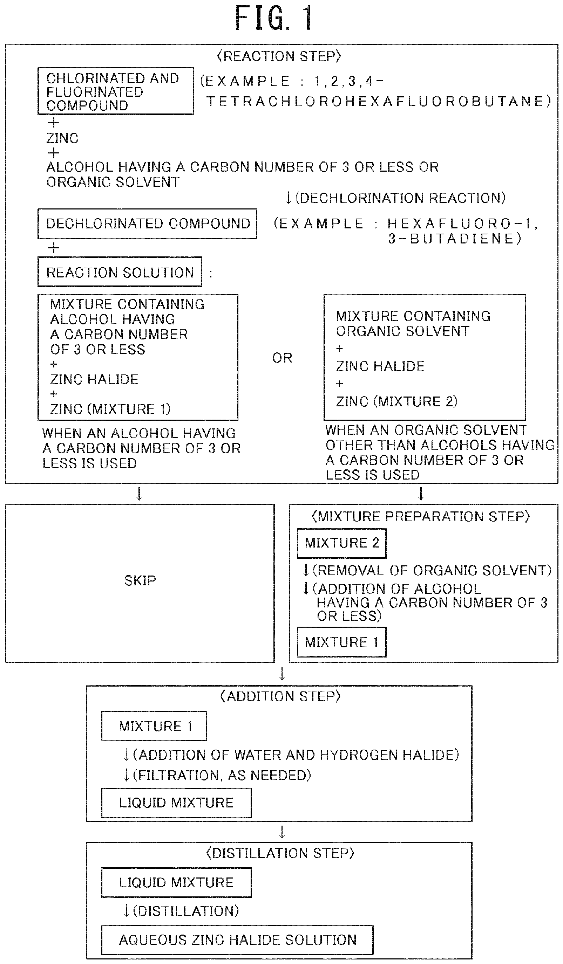

FIG. 1 is a flow chart illustrating an embodiment of a method for producing an aqueous solution of zinc halide according to the present invention.

### Description of Embodiments

An embodiment of the present invention will now be described. The present embodiment is merely an example of the present invention, and the present invention is not limited to the present embodiment. Various modifications or improvements can be made in the present embodiment, and such various modifications and improvements can be encompassed by the present invention.

A method for producing an aqueous solution of zinc halide of the present embodiment includes an addition step of adding water and a hydrogen halide to a mixture containing an alcohol having a carbon number of 3 or less, a zinc halide, and zinc (hereinafter also called "mixture 1") to give a liquid mixture, and a distillation step of distilling the liquid mixture to remove the alcohol having a carbon number of 3 or less from the liquid mixture, giving an aqueous solution of zinc halide.

The method for producing an aqueous solution of zinc halide of the embodiment may further include a mixture preparation step of removing, from a mixture containing an organic solvent, a zinc halide, and zinc (hereinafter also called "mixture 2"), the organic solvent, and then adding an alcohol having a carbon number of 3 or less to prepare a mixture containing the alcohol having a carbon number of 3 or less, the zinc halide, and the zinc (mixture 1), and the mixture 1 prepared in the mixture preparation step may be subjected to the addition step.

The halogen may be any type and can be selected from fluorine, chlorine, bromine, and iodine. For example, in the mixture containing an alcohol having a carbon number of 3 or less, a zinc halide, and zinc (mixture 1), the zinc halide can be selected from zinc chloride, zinc fluoride, zinc bromide, and zinc iodide. As the hydrogen halide to be added to the mixture 1, a hydrogen halide having the same halogen as the halogen selected for the zinc halide is preferably selected. In other words, when the zinc halide is zinc chloride, hydrogen chloride is preferably selected as the hydrogen halide, and when the zinc halide is zinc fluoride, hydrogen fluoride is preferably selected as the hydrogen halide.

Such a method for producing an aqueous solution of zinc halide of the embodiment as described above will be described in further detail hereinafter with reference to the flow chart in FIG. 1.

In the method for producing an aqueous solution of zinc halide of the embodiment, a reaction solution obtained by dechlorination reaction (reaction step) of a chlorinated and fluorinated compound (for example, 1,2,3,4-tetrachlorohexafluorobutane) as a hydrocarbon compound having chlorine and fluorine in the presence of zinc may be subjected to the addition step as the mixture containing an alcohol having a carbon number of 3 or less, a zinc halide, and zinc (mixture 1). In this case, the hydrogen halide is hydrogen chloride, and the zinc halide is zinc chloride. The dechlorination reaction is performed in an alcohol having a carbon number of 3 or less, and the resulting reaction solution is a solution containing the alcohol having a carbon number of 3 or less as the solvent.

When the method for producing an aqueous solution of zinc halide of the embodiment includes a mixture preparation step, a reaction solution obtained by dechlorination reaction of a chlorinated and fluorinated compound as a hydrocarbon compound having chlorine and fluorine in the presence of zinc may be subjected to the mixture preparation step as the mixture containing an organic solvent (an organic solvent other than alcohols having a carbon number of 3 or less), a zinc halide, and zinc (mixture 2). In this case, the hydrogen halide is hydrogen chloride, and the zinc halide is zinc chloride. The dechlorination reaction is performed in the above organic solvent (an organic solvent other than alcohols having a carbon number of 3 or less), and the resulting reaction solution is a solution containing the organic solvent as the solvent. As the organic solvent, for example, dimethylformamide, tetrahydrofuran, dioxane, acetic acid, an alcohol, an aromatic hydrocarbon, or a mixed solvent of them can be used.

According to such a method for producing an aqueous solution of zinc halide of the embodiment, an industrially useful, highly pure aqueous solution of zinc halide can be produced from a mixture containing a zinc halide . For example, as described above, a reaction solution that is obtained by reduction or dehalogenation reaction of an organic compound with zinc and contains a zinc halide and zinc can be used to produce a highly pure aqueous solution of zinc halide. Examples of the dehalogenation reaction with zinc include dechlorination reaction of a chlorinated and fluorinated compound as a hydrocarbon compound having chlorine and fluorine in the presence of zinc, as described above.

Typically, the dechlorination reaction of an organic compound with zinc is performed by the method including the following steps. In other words, the method includes mixing a chlorinated compound and zinc in an appropriate organic solvent, such as dimethylformamide, tetrahydrofuran, dioxane, acetic acid, an alcohol, an aromatic hydrocarbon, or a mixed solvent of them, dechlorinating the chlorinated compound under heating or stirring, separating, form the resulting mixture of the dechlorinated product, zinc chloride, an unreacted zinc, an unreacted chlorinated compound, by-products, and the used organic solvent, most of the dechlorinated product, the unreacted chlorinated compound, the by-products, and the like by means appropriate for the respective properties, and removing the used organic solvent by distillation or the like.

As a result of the dechlorination reaction by such a method, a mixture containing a large amount of zinc chloride, the unreacted zinc, the used organic solvent residue, and the like (mixture 2) can be obtained. It should be understood that the mixture 2 may contain a small amount of the unreacted chlorinated compound, by-products, the target product, the organic solvent, and other impurities.

In the mixture preparation step, the organic solvent contained in the mixture 2 is removed by distillation or the like, and then an alcohol having a carbon number of 3 or less is added. Consequently, a "mixture containing the alcohol having a carbon number of 3 or less, the zinc halide, and the zinc (mixture 1)" can be obtained.

The dehalogenation reaction with zinc may be performed by using an alcohol having a carbon number of 3 or less as the organic solvent. In this case, after the completion of the reaction, by removing a target product, an unreacted chlorinated compound, and by-products by means appropriate for the respective substances, the "mixture containing an alcohol having a carbon number of 3 or less, a zinc halide, and zinc (mixture 1) " in the present invention can be directly obtained.

The "mixture 1" obtained as above contains a large amount of a zinc halide usable as a resource. When an alcohol having a carbon number of 3 or less is simply removed by distillation or the like, a complicated pumiceous substance is formed unfortunately. The pumiceous substance is thought to be a zinc halide solidified while containing zinc and organic compounds derived from dehalogenation reaction or the like, and an aqueous solution of zinc halide prepared from the pumiceous substance has an extremely low purity.

When water and a hydrogen halide are added to the "mixture 1" (addition step), the zinc halide is thoroughly dissolved, and zinc reacts with the hydrogen halide to yield a zinc halide. When the zinc halide formed by dehalogenation reaction with zinc is specifically zinc chloride, addition of water and hydrogen chloride (hydrochloric acid) allows the unreacted zinc to yield zinc chloride.

As described above, by the addition step of adding water and a hydrogen halide to the "mixture 1", impurities including small amounts of organic compounds derived from dehalogenation reaction or the like are released without formation of a pumiceous substance. By subjecting the mixture in this state to the subsequent distillation step, the impurities can be removed. Before the distillation step, the mixture may be filtered as needed, and the filtrate may be subjected to the distillation step.

Examples of the alcohol having a carbon number of 3 or less include methanol, ethanol, 1-propanol, and 2-propanol. These alcohols sufficiently dissolve zinc halides and thus are preferred. These alcohols have appropriate boiling points lower than water and thus are easily separated from water. In addition, impurities are easily removed in the distillation step or the like.

An alcohol having a carbon number of 4 or more has an excessively high boiling point and thus is separated from water in a complicated manner, unfortunately. An alcohol having a boiling point lower than water can be selectively removed by evaporation in the distillation step and thus is preferably used to finally give an aqueous solution of zinc halide. Of these alcohols, 2-propanol is most preferred in terms of the balance of handleability, easy availability, and high boiling point.

Alcohols having a carbon number of 4 or more insufficiently dissolve zinc halides and thus may interfere with dissolution of various components in a mixture.

As described above, the alcohol having a carbon number of 3 or less is preferred in the production of an aqueous solution of zinc halide. In consideration of this advantage, the dehalogenation reaction with zinc may be performed in an alcohol having a carbon number of 3 or less (especially 2-propanol).

For improvement in the solubility of a chlorinated and fluorinated compound, as needed, a mixture of an alcohol having a carbon number of 3 or less with an additional solvent may be used in the dehalogenation reaction with zinc. Examples of the additional solvent to be mixed include dimethylformamide, tetrahydrofuran, dioxane, acetic acid, an alcohol having a carbon number of 4 or more, an aromatic hydrocarbon, and a mixture of them. When an additional solvent is used, the alcohol having a carbon number of 3 or less and the additional solvent can be removed from a reaction solution obtained in the dehalogenation reaction, and then an alcohol having a carbon number of 3 or less can be added.

In the addition step, water and a hydrogen halide are added to the "mixture 1", and the mass ratio of water to the "mixture 1" is preferably in a range of 0.5 or more and 2.0 or less.

As the water, tap water, ion-exchanged water, distilled water, pure water, ultrapure water, or the like can be used, and pure water or ultrapure water is preferred.

The amount of the hydrogen halide added in the addition step is preferably more than the equivalent amount that enables conversion of zinc into a zinc halide . When remaining, zinc may be separated by filtration or the like. When an aqueous zinc chloride solution is produced, hydrochloric acid is preferably added as "water and a hydrogen halide". The concentration of hydrochloric acid is not specifically limited and is preferably 1.0% by mass or more and 37.0% by mass or less.

After addition of water and a hydrogen halide to the "mixture 1", heating or stirring may be performed when needed for the reaction of zinc and the hydrogen halide or the dissolution of a solid content.

The distillation conditions in the distillation step are not specifically limited as long as the alcohol having a carbon number of 3 or less is removed from the liquid mixture obtained in the addition step, and the liquid mixture obtained in the addition step may be distilled by heating at 50°C or more and 150°C or less, preferably 50°C or more and 90°C or less. The pressure condition during the distillation may be normal pressure or reduced pressure. For example, simple distillation may be performed to remove an alcohol having a carbon number of 3 or less as a low-boiling component from the head. In such distillation conditions, the alcohol having a carbon number of 3 or less can be efficiently removed from the liquid mixture obtained in the addition step.

Before or after the addition step or the distillation step, another step may be appropriately performed. For example, when a resulting aqueous solution of zinc halide is colored, the aqueous solution of zinc halide may be brought into contact with a refining agent after the distillation step. Examples of the refining agent include carbonaceous solid materials typified by activated carbon, zeolite, activated alumina, and silica gel, and activated carbon is preferred.

After the addition step or after the distillation step, filtration, centrifugation, or a similar step may be performed to remove insoluble substances. When an undesirable component such as a fluorine ion is contained, a calcium salt or the like may be brought into contact to remove the undesirable component after the addition step or after the distillation step.

### Examples

The present invention will next be described in further detail with reference to examples and comparative examples.

### [Example 1]

### <Reaction step>

In an SUS316 autoclave having an internal volume of 500 mL, 119 g of 2-propanol as an organic solvent and 82.4 g of granular metal zinc were placed. The autoclave had a jacket with a cooling structure and a stirrer at the upper part, and the heating system was a jacket heating system.

While the content in the autoclave was stirred, the temperature was increased to 70°C. While the content in the autoclave was maintained at a temperature of 70°C under normal pressure, 149 g of 1,2,3,4-tetrachlorohexafluorobutane was added dropwise at a drop rate of 9.31 g per hour and was reacted for 5 hours. After completion of the reaction for 5 hours, the reaction solution was further heated to vaporize a part of the organic solvent (2-propanol) and the product, and the vapor of them was cooled, liquified, and collected. The obtained liquid was subjected to simple distillation, and a gas phase mainly containing the product was separated from a liquid phase mainly containing the organic solvent. The separated product was analyzed by gas chromatography to show 94.5% by volume of hexafluoro-1,3-butadiene and 5.5% by volume of other components.

### <Addition step>

To 150g of the reaction solution obtained in the reaction step (the reaction solution after vaporization of a part of the organic solvent and the product by further heating), 150g of water and 2.5g of 35% by mass hydrochloric acid were added, and the whole was stirred. The mixture was then filtered through a filter paper, type 5B, for quantitative analysis to remove insoluble substances, giving a liquid mixture.

### <Distillation step>

The liquid mixture obtained in the addition step was subjected to simple distillation to remove the organic solvent (2-propanol) by evaporation. Distillation was performed until the distillate fraction containing 2-propanol reached a total amount of 150 g, and then the distillation residue was collected to give an aqueous zinc chloride solution having a zinc chloride concentration of 51% by mass. The aqueous zinc chloride solution had a sufficiently, industrially valuable purity, which was shown by the following purity determination results.

### <Determination of purity>

The purity of the aqueous zinc chloride solution was determined by the following two methods.

### [Determination 1]

The zinc in the aqueous zinc chloride solution was quantitatively determined by chelatometric titration using ethylenediaminetetraacetic acid (EDTA), and the result was converted into a zinc chloride amount. In the measurement, all zinc in the aqueous zinc chloride solution was assumed to be in the form of zinc chloride.

Next, the water in the aqueous zinc chloride solution was quantitatively determined by Karl Fischer method. The amount of the zinc chloride and the amount of the water were subtracted from the total amount of the aqueous zinc chloride solution to give the impurity amount in the aqueous zinc chloride solution. As a result, the impurity amount in the aqueous zinc chloride solution was less than the detection limit.

### [Determination 2]

The aqueous zinc chloride solution was analyzed by gas chromatography. Only 832 ppm by mass of isopropyl alcohol was quantitatively determined as the component other than zinc chloride or water. Diisopropyl ether and freons were detected as other impurities, but these amounts were too small for quantitative determination.

### [Example 2]

### <Reaction step>

The step was substantially the same as in Example 1.

### <Addition step>

The step was substantially the same as in Example 1.

### <Distillation step>

The liquid mixture obtained in the addition step was distilled with a rotary evaporator to remove the organic solvent (2-propanol) by evaporation. Distillation was performed until the distillate fraction containing 2-propanol reached a total amount of 150 g, and then the distillation residue was collected to give an aqueous zinc chloride solution having a zinc chloride concentration of 48% by mass. The aqueous zinc chloride solution had a sufficiently, industrially valuable purity, which was shown by the following purity determination results.

### <Determination of purity>

The purity of the aqueous zinc chloride solution was determined in the same manner as in Example 1.

### [Determination 1]

The impurity amount in the aqueous zinc chloride solution was less than the detection limit.

### [Determination 2]

Only 1, 002 ppm by mass of 2-propanol was quantitatively determined as the component other than zinc chloride or water. Diisopropyl ether and freons were detected as other impurities, but these amounts were too small for quantitative determination.

### [Example 3]

### <Reaction step>

The step was substantially the same as in Example 1.

### <Addition step>

To 500 g of the reaction solution obtained in the reaction step (the reaction solution after vaporization of a part of the organic solvent and the product by further heating), 500 g of water and 7.0 g of 35% by mass hydrochloric acid were added, and the whole was stirred. The mixture was then filtered through a filter paper, type 5B, for quantitative analysis to remove insoluble substances, giving a liquid mixture.

### <Distillation step>

The liquid mixture obtained in the addition step was distilled at a reflux ratio of 5:1 by using an Oldershaw type distillation apparatus having five trays to remove the organic solvent (2-propanol) by evaporation. Distillation was performed until the distillate fraction containing 2-propanol reached a total amount of 500 g, and then the distillation residue was collected to give an aqueous zinc chloride solution having a zinc chloride concentration of 49% by mass. The aqueous zinc chloride solution had a sufficiently, industrially valuable purity, which was shown by the following purity determination results.

### <Determination of purity>

The purity of the aqueous zinc chloride solution was determined in the same manner as in Example 1.

### [Determination 1]

The impurity amount in the aqueous zinc chloride solution was less than the detection limit.

### [Determination 2]

Only 488 ppm by mass of 2-propanol was quantitatively determined as the component other than zinc chloride or water. Diisopropyl ether and freons were detected as other impurities, but these amounts were too small for quantitative determination.

### [Example 4]

### <Reaction step>

In an SUS316 autoclave having an internal volume of 500 mL, 140g of tetrahydrofuran as an organic solvent and 82.4 g of granular metal zinc were placed. The autoclave had a jacket with a cooling structure and a stirrer at the upper part, and the heating system was a jacket heating system.

While the content in the autoclave was stirred, the temperature was increased to 60°C. While the content in the autoclave was maintained at a temperature of 60°C under normal pressure, 149 g of 1,2,3,4-tetrachlorohexafluorobutane was added dropwise at a drop rate of 9.31 g per hour and was reacted for 5 hours. After completion of the reaction for 5 hours, the reaction solution was further heated to vaporize a part of the organic solvent (tetrahydrofuran) and the product, and the vapor of them was cooled, liquified, and collected. The obtained liquid was subjected to simple distillation, and a gas phase mainly containing the product was separated from a liquid phase mainly containing the organic solvent. The separated product was analyzed by gas chromatography to show 93.2% by volume of hexafluoro-1,3-butadiene and 6.8% by volume of other components.

### <Mixture preparation step>

Next, 150 g of the reaction solution obtained in the reaction step (the reaction solution after vaporization of a part of the organic solvent and the product by further heating (mixture 2)) was subjected to sinple vacuum distillation to give 90 g of a pumiceous substance containing zinc chloride as the residue, and 80 g of 2-propanol was added to the pumiceous substance to give a mixture 1.

### <Addition step>

To the mixture 1 obtained in the mixture preparation step, 150 g of water and 2.5 g of 35% by mass hydrochloric acid were added, and the whole was stirred. The mixture was then filtered through a filter paper, type 5B, for quantitative analysis to remove insoluble substances, giving a liquid mixture.

### <Distillation step>

The liquid mixture obtained in the addition step was subjected to simple distillation to remove the organic solvent (main component: 2-propanol) by evaporation. Distillation was performed until the distillate fraction containing 2-propanol reached a total amount of 180 g, and then the distillation residue was collected to give an aqueous zinc chloride solution having a zinc chloride concentration of 52% by mass. The aqueous zinc chloride solution had a sufficiently, industrially valuable purity, which was shown by the following purity determination results.

### <Determination of purity>

The purity of the aqueous zinc chloride solution was determined in the same manner as in Example 1.

### [Determination 1]

The impurity amount in the aqueous zinc chloride solution was less than the detection limit.

### [Determination 2]

Only 1, 002 ppm by mass of 2-propanol was quantitatively determined as the component other than zinc chloride or water. Tetrahydrofuran, diisopropyl ether, and freons were detected as other impurities, but these amounts were too small for quantitative determination.

### [Comparative Example 1]

### <Reaction step>

The step was substantially the same as in Example 1.

### <Addition step>

Through a filter paper, type 5B, for quantitative analysis, 150 g of the reaction solution obtained in the reaction step (the reaction solution after vaporization of a part of the organic solvent and the product by further heating) was filtered to remove insoluble substances, giving a filtrate.

### <Distillation step>

The filtrate obtained in the addition step was heated to evaporate the organic solvent (2-propanol), then solid substances were removed, and 75 g of water was added, giving an aqueous zinc chloride solution having a zinc chloride concentration of 45% by mass. The obtained aqueous zinc chloride solution contained large amounts of impurities and had a low industrial value, which was shown by the following purity determination results.

### <Determination of purity>

The purity of the aqueous zinc chloride solution was determined in the same manner as in Example 1.

### [Determination 1]

The impurity amount in the aqueous zinc chloride solution was 5% by mass.

## Claims

1. A method for producing an aqueous solution of zinc halide, the method comprising:
an addition step of adding water and a hydrogen halide to a mixture containing an alcohol having a carbon number of 3 or less, a zinc halide, and zinc to give a liquid mixture; and
a distillation step of distilling the liquid mixture to remove the alcohol having a carbon number of 3 or less from the liquid mixture, giving an aqueous solution of zinc halide.

2. The method for producing an aqueous solution of zinc halide according to claim 1, further comprising:
a mixture preparation step of removing the organic solvent, from a mixture containing an organic solvent, a zinc halide, and zinc, and then adding an alcohol having a carbon number of 3 or less to prepare a mixture containing the alcohol having a carbon number of 3 or less, the zinc halide, and the zinc,
wherein the mixture containing the alcohol having a carbon number of 3 or less, the zinc halide, and the zinc prepared in the mixture preparation step is subjected to the addition step.

3. The method for producing an aqueous solution of zinc halide according to claim 1, wherein a reaction solution obtained by dechlorination reaction of a chlorinated and fluorinated compound as a hydrocarbon compound having chlorine and fluorine in the presence of zinc is used as the mixture containing an alcohol having a carbon number of 3 or less, a zinc halide, and zinc, the hydrogen halide is hydrogen chloride, and the zinc halide is zinc chloride.

4. The method for producing an aqueous solution of zinc halide according to claim 2, wherein a reaction solution obtained by dechlorination reaction of a chlorinated and fluorinated compound as a hydrocarbon compound having chlorine and fluorine in the presence of zinc is used as the mixture containing an organic solvent, a zinc halide, and zinc, the hydrogen halide is hydrogen chloride, and the zinc halide is zinc chloride.

5. The method for producing an aqueous solution of zinc halide according to claim 1 or claim 2, wherein the hydrogen halide is hydrogen chloride, and the zinc halide is zinc chloride.

6. The method for producing an aqueous solution of zinc halide according to any one of claims 1 to 5, wherein in the distillation step, the liquid mixture is distilled by heating at 50°C or more and 150°C or less.
